(19) Europäisches Patentamt
European Patent Office
Office européen des brevets

(11) Veröffentlichungsnummer: **0 155 912**
**A2**

# (12) EUROPÄISCHE PATENTANMELDUNG

(21) Anmeldenummer: 85810112.4

(22) Anmeldetag: 14.03.85

(51) Int. Cl.⁴: C 08 K 5/34
C 08 K 5/52, C 08 L 23/02
//A61L2/08

(30) Priorität: 20.03.84 US 591635

(43) Veröffentlichungstag der Anmeldung:
25.09.85 Patentblatt 85/39

(84) Benannte Vertragsstaaten:
DE FR GB IT

(71) Anmelder: CIBA-GEIGY AG
Postfach
CH-4002 Basel(CH)

(72) Erfinder: Horng, Paul-Li
4 David Terrace
White Plains, N.Y. 10603(US)

## (54) Strahlenstabilisierte polymere Zusammensetzungen.

(57) Polymere Zusammensetzungen, die als Stabilisatoren gegen Hochenergie-Strahlen ein Stabilisatorgemisch aus a) einer 2,2,6,6-Tetraalkylpiperidin-Verbindung und b) einem Pentaerithritoldiphosphit. Die so ausgerüsteten Polymere zeichnen sich nach Bestrahlung durch sehr gute farblich und physikalische Eigenschaften aus.

EP 0 155 912 A2

Croydon Printing Company Ltd.

CIBA-GEIGY AG
Basel (Schweiz)

3-14811/=/CGC 1076

Strahlenstabilisierte polymere Zusammensetzungen

Polymere Artikel, insbesondere medizinische Artikel und Verpackungen, wie Spritzen und hypodermatische Nadeln und ähnliches, werden zu Sterilisationszwecken mit Hochenergiestrahlen bestrahlt. Die Verwendung von auf diese Weise sterilisierten Polyolefinen war jedoch beschränkt, da die zur Sterilisierung notwendige Strahlenmenge auch Abbaureaktionen des Polymers begünstigt. Diese zeigt sich in der Verfärbung und Versprödung. Der Mechanismus solcher unerwünschter Erscheinungsbilder ist z.B. für den Fall von Polypropylen im Artikel von Williams et al, Radia. Phys. Chem. 15, 59-63 (1980) beschrieben.

Es wurden bereits verschiedene Stabilisierungssysteme vorgeschlagen um die unerwünschten Abbaureaktionen zu vermindern. So werden in der US PS 2,263,582 trisubstituierte Phenole als Stabilisatoren vorgeschlagen. Deren Verwendung führt allerdings zur Bildung gefärbter Nebenprodukte. Der Williams Artikel beschreibt, dass Stabilisatoren auf Phosphit-Basis die Verfärbung unterdrücken können. Verschiedene Phosphite verschlechtern jedoch die physikalischen Eigenschaften von Polyolefinen.

Die EP 7736 beschreibt die Verwendung gewisser sterisch gehinderter heterocyclischer Amine als Strahlungsstabilisatoren. Diese können in Kombination mit phenolischen Antioxidantien und/oder Thiosynergisten eingesetzt werden. Zwar sind die so stabilisierten Polymere farblich gut, der Verlust der guten physikalischen Eigenschaften ist jedoch nicht unterdrückt.

Pentaerithritol-Phosphite bilden eine andere Substanzklasse, welche für diese Anwendung beschrieben worden ist. Alkyl-, Alkaryl- und

Aralkylsubstituierte Pentaerithritol-Phosphite sind Gegenstand der GB 2,093,463, während verschiedene organische Phosphite, wie z.B. Distearyl-pentaerithritol-diphosphit in den US PS 3,897,388 und 4,036,719. Auch hier werden diese mit Thiosynergisten und/oder phenolischen Antioxidantien kombiniert, die Veränderung der physikalischen Eigenschaften kann jedoch auch nicht genügend unter Kontrolle gehalten werden.

Ausserdem werden in der JP Pat. Anm. Sho 56-64397 symmetrische Triarylphosphite als Strahlungsstabilisatoren vorgeschlagen, welche auch in Kombination mit phenolischen Antioxidantien und/oder sterisch gehinderten Amin-Lichtstabilisatoren eingesetzt werden. Die BE-PS beschreibt Gammastrahlenresistente Polyolefine, welche neben sterisch gehinderten Aminen verschiedene spezifische Phenole und Phosphorigsäureester dieser Phenole enthalten. In all diesen Fällen werden die hohen Anforderungen, die an ein solches Stabilisierungssystem gestellt werden, nicht erreicht.

Gegenstand der Erfindung ist daher ein Stabilisatorsystem, welche Polyolefinen ausgezeichnete Resistenz gegen den Einfluss von Hochenergie-Strahlen gibt. Diese Resistenz zeigt sich in sehr guten Farbeigenschaften und guten physikalischen Eigenschaften.

Es wurde gefunden, dass eine polymere Zusammensetzung, vorzugsweise ein Polyolefin, welches ein Gemisch eines sterisch gehinderten Amins und eines Pentaerithritol-Phosphits; gegebenenfalls in Kombination mit phenolischen Antioxidantien, ausgezeichnete Stabilität gegen Hochenergie-Strahlen aufweist. Diese Kombinationen zeigen kaum Verfärbung, unwesentliches Nachlassen der Flexibilität, d.h. der physikalischen Eigenschaften, und minimalen Rückgang der Stabilisatorkonzentration. Neben der Strahlungsstabilisierung zeigen diese Systeme auch ausgezeichnete Langzeitstabilisierung, selbst bei erhöhter Temperatur.

Die sterisch gehinderten Amine gemäss der vorliegenden Erfindung sind an sich bekannte Verbindungen, welche mindestens eine Gruppe der Formel enthalten

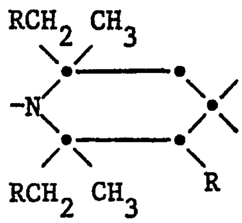
(I)

worin R Wasserstoff oder Methyl bedeutet.

Vorzugsweise handelt es sich dabei um folgende Verbindungsklassen:

A) Lichtschutzmittel der Formel II:

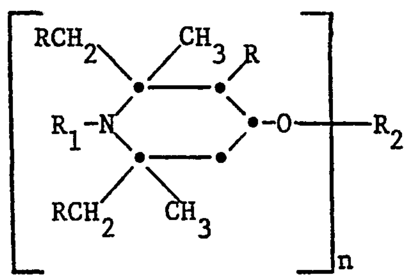
(II)

worin n die Zahlen 1-4, vorzugsweise 1 oder 2 bedeutet, R Wasserstoff oder Methyl ist, $R_1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl, eine Gruppe $-CH_2CH(OH)-Z$, worin Z Wasserstoff, Methyl oder Phenyl ist, wobei $R_1$ vorzugsweise Wasserstoff, $C_1$-$C_{12}$ Alkyl, Allyl, Benzyl, Acetyl oder Acryloyl ist und $R_2$, wenn n = 1, Wasserstoff, gegebenenfalls durch ein oder mehrere Sauerstoffatome unterbrochenes $C_1$-$C_{18}$ Alkyl, Cyanäthyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einen einwertigen Silylrest, vorzugsweise einen Rest einer aliphatischen Carbonsäure mit 2-18 C-Atomen, einer cycloaliphatischen Carbonsäure mit 5-12 C-Atomen oder einer aromatischen

Carbonsäure mit 7-15 C-Atomen, und $R_2$, wenn n = 2, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2-36 C-Atomen, einer cycloaliphatischen oder aromatischen Dicarbonsäure mit 8-14 C-Atomen, einer aliphatischen, cycloaliphatischen oder aromatischen Dicarbaminsäure mit 8-14 C-Atomen, und $R_2$, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, und $R_2$, wenn n = 4, einen vierwertigen Rest einer aliphatischen, cycloaliphatischen oder aromatischen Tetracarbonsäure bedeutet.

Bedeuten etwaige Substituenten $C_1$-$C_{12}$ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

In der Bedeutung von $C_1$-$C_{18}$ Alkyl können $R_1$ oder $R_2$ z.B. die oben angeführten Gruppen und dazu noch beispielsweise n-Tridecyl, n-Tetradecyl, n-Hexadecyl oder n-Octadecyl darstellen.

Wenn $R_1$ $C_3$-$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R_1$ ist als $C_3$-$C_8$ Alkinyl bevorzugt Propargyl.
Als $C_7$-$C_{12}$ Aralkyl ist $R_1$ insbesondere Phenäthyl oder vor allem Benzyl.

$R_1$ ist als $C_1$-$C_8$ Alkanoyl beispielsweise Formyl, Propionyl, Butyryl, Octanoyl aber bevorzugt Acetyl und als $C_3$-$C_5$ Alkenoyl insbesondere Acryloyl.

Bedeutet $R_2$ einen einwertigen Rest einer Carbonsäure, so stellt es beispielsweise einen Essigsäure-, Stearinsäure-, Salicylsäure-, Methacrylsäure-, Maleinsäure-, Benzoe- oder β-(3,5-Di-tert.-butyl-4-hydroxyphenyl)-propionsäurerest dar.

Bedeutet $R_2$ einen zweiwertigen Rest einer Dicarbonsäure, so stellt es beispielsweise einen Adipinsäure-, Suberinsäure-, Sebacinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R_2$ einen dreiwertigen Rest einer Tricarbonsäure dar, so bedeutet es z.B. einen Trimellithsäure- oder einen Nitrilotriessigsäurerest.

Stellt $R_2$ einen vierwertigen Rest einer Tetracarbonsäure dar, so bedeutet es z.B. einen Pyromellithsäurerest.

Bedeutet $R_2$ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Polyalkylpiperidin-Lichtschutzmittel dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin

5) 4-Stearoyloxy-2,2,6,6-tetramethylpiperidin
6) 1-Aethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) 1-Benzyl-2,2,6,6-tetramethyl-4-piperidinylmaleinat
10) (Di-2,2,6,6-tetramethylpiperidin-4-yl)-adipat
11) (Di-2,2,6,6-tetramethylpiperidin-4-yl)-sebacat
12) (Di-1,2,3,6-tetramethyl-2,6-diäthyl-piperidin-4-yl)-sebacat
13) (Di-1-allyl-2,2,6,6-tetramethyl-piperidin-4-yl)-phthalat
14) 1-Propargyl-4-β-cyanoäthyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diäthyl-piperidin-4-yl)-ester
22) Hexan-1',6'-bis-(4-carbamoyloxy-1-n-butyl-2,2,6,6-tetramethyl-piperidin)
23) Toluol-2',4'-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)-phosphat
28) Phenyl-[bis-(1,2,2,6,6-pentamethylpiperidin-4-yl)]-phosphonat
29) (Di-1,2,2,6,6-pentamethylpiperidin-4-yl)-sebacat
30) (Di-1-benzyl-2,2,6,6-tetramethylpiperidin-4-yl)-sebacat
31) (Di-1-allyl-2,2,6,6-tetramethylpiperidin-4-yl)-sebacat
32) 2,2,6,6-Tetramethyl-4-hydroxy-4-carbamoyl-piperidin.

B) Polymere Verbindungen, deren wiederkehrende Struktureinheit mindestens einen Polyalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für Polyalkylpiperidin-Lichtschutzmittel dieser Klasse sind die Verbindungen der folgenden Formeln, wobei m die Zahlen 2- etwa 200 bedeutet.

33) 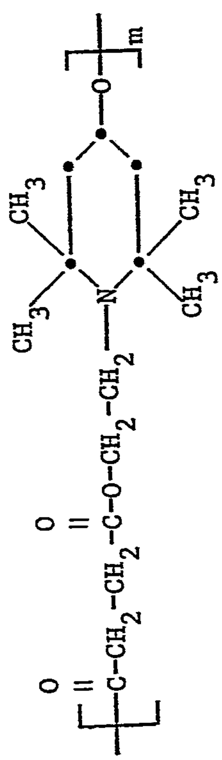

34) 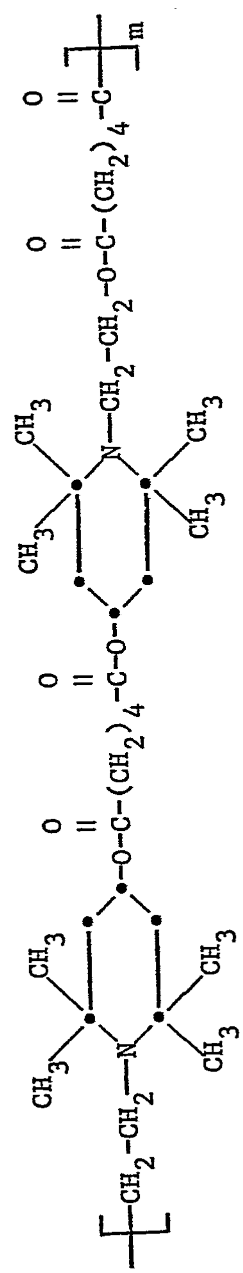

35) 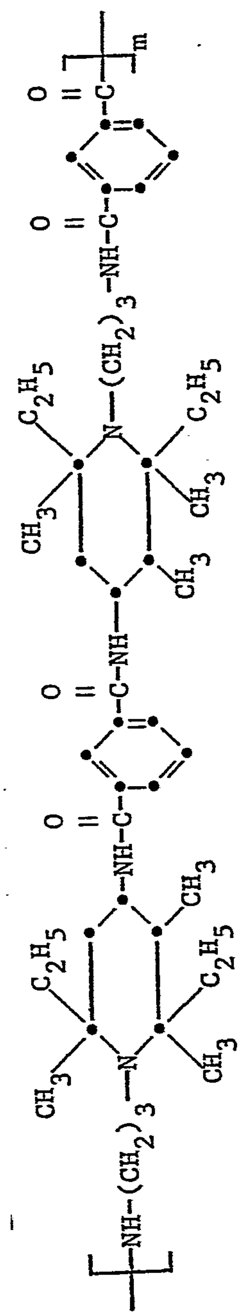

36) 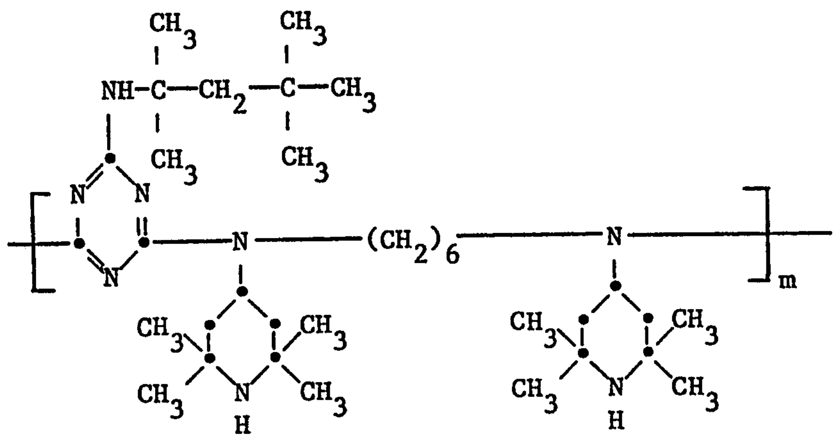

37) 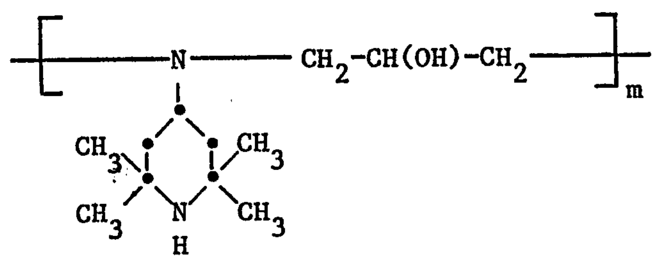

38) 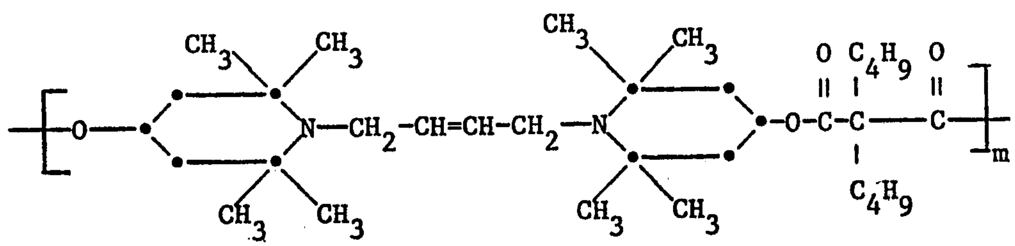

39) 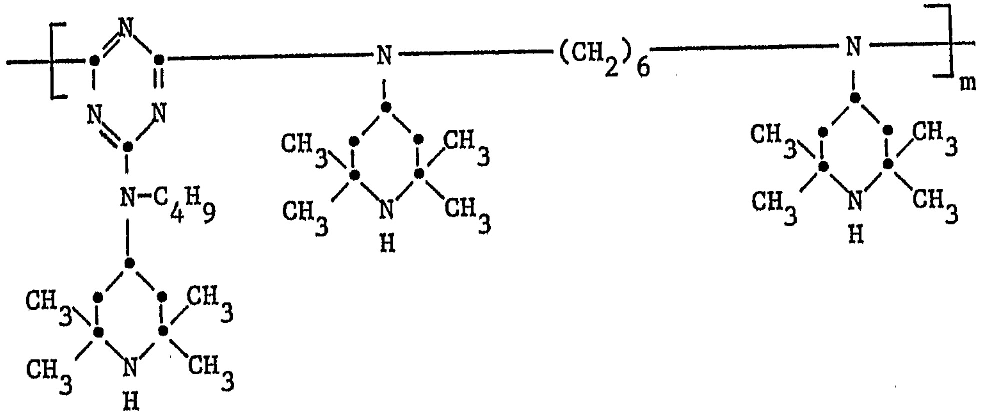

40) 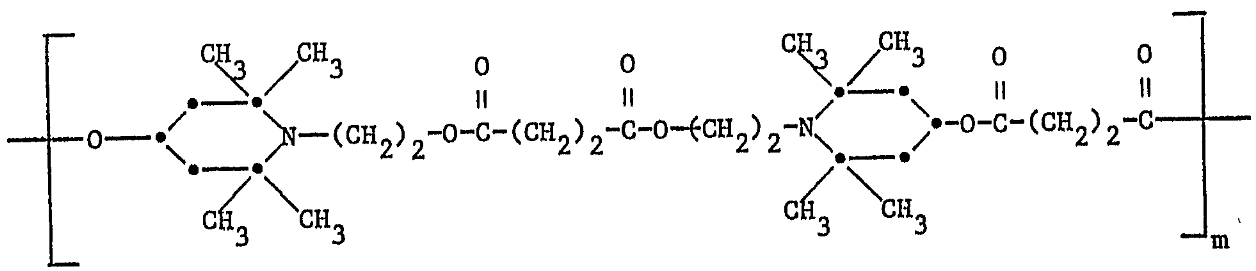

41) 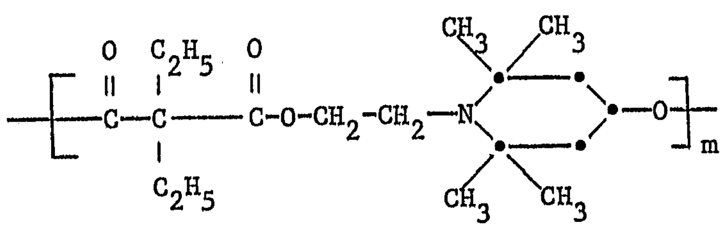

42) 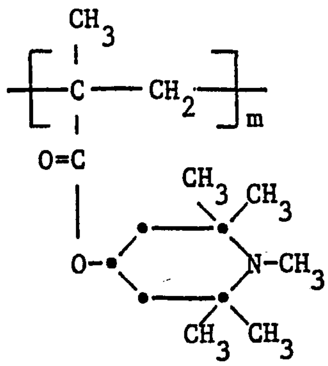

43) 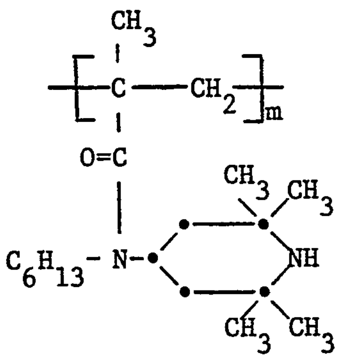

44) 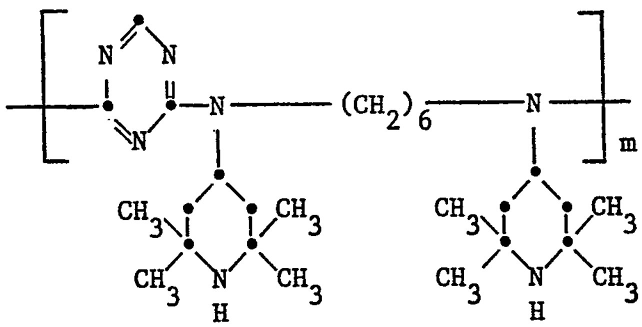

45) 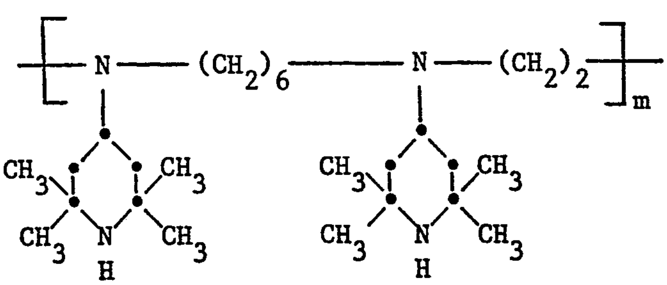

Solche Verbindungen sind bekannt und teilweise im Handel erhältlich. (s.z.B. US 4,086,204 und 4,233,412).

Die erfindungsgemäss verwendbaren Phosphite entsprechen der Formel III

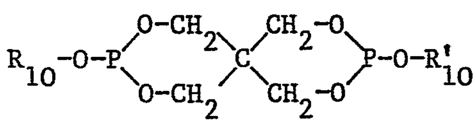

(III)

worin $R_{10}$ und $R'_{10}$ unabhängig voneinander Alkyl, Alkaryl, Aralkyl, Aryl mit je 10-30 C-Atomen oder eine Gruppe der Formel IV bedeuten

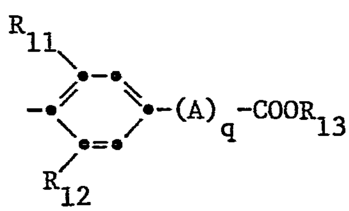

(IV)

wobei $R_{11}$ und $R_{12}$ unabhängig voneinander $C_4$-$C_{12}$ Alkyl sind, und höchstens ein Rest $R_{11}$ oder $R_{12}$ Wasserstoff ist, und A $C_1$-$C_6$ Alkylen ist, und $R_{13}$ $C_1$-$C_{24}$ Alkyl, Phenyl oder Alkylphenyl ist und q 0 oder 1 bedeutet.

Beispiele für $R_{10}$ sind Decyl, Dodecyl, Tetradecyl, Octadecyl, Eicosyl, 4-tert.-Butylphenyl; 2,4-Di-tert.-Butylphenyl; 2,4-Dinonylphenyl, 2-Isooctylphenyl, 4-Nonylphenyl, 4-Phenylbutyl. $R_{10}$ sollte 10-30 C-Atome besitzen. Bevorzugt ist $R_{10}$ Alkaryl und insbesondere 2,4-Dialkylphenyl. Von besonderem Interesse ist als $R_{10}$ 2,4-Di-tert.-butylphenyl.

$R_{11}$ und $R_{12}$ sind als $C_4$-$C_{12}$ Alkyl z.B. tert.-Butyl, tert.-Amyl, 1,1,3,3-Tetramethylbutyl oder 1,1,3,3,5,5-Hexamethylhexyl, bevorzugt aber tert.-Butyl.

A ist bevorzugt Methylen, Aethylen oder Trimethylen.

$R_{13}$ ist bevorzugt $C_1$-$C_{18}$ Alkyl, wie Methyl, Aethyl, Propyl, Butyl, Decyl, Dodecyl, Tetradecyl oder Octadecyl.

$R_{13}$ kann als Alkylphenyl die oben für $R_{10}$ angegebene Bedeutung haben.

Solche Phosphite sind beispielsweise in US 4,180,498 und 3,305,886 beschrieben und teilweise im Handel erhältlich.

Gegegenenfalls können auch sterisch gehinderte Phenole in die zu schützenden Substrate eingearbeitet werden.

1. Antioxidantien

1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether

2,2'-Thio-bis-(6-tert.butyl-4-methylphenol)

2,2'-Thio-bis-(4-octylphenol)

4,4'-Thio-bis-(6-tert.butyl-3-methylphenol)

4,4'-Thio-bis-(6-tert.butyl-2-methylphenol)

1.4. Alkyliden-Bisphenole

2,2'-Methylen-bis-(6-tert.butyl-4-methylphenol)

2,2'-Methylen-bis-(6-tert.butyl-4-ethylphenol)

2,2'-Methylen-bis-[4-methyl-6-(α-methylcyclohexyl)-phenol]

2,2'-Methylen-bis-(4-methyl-6-cyclohexylphenol)

2,2'-Methylen-bis-(6-nonyl-4-methylphenol)

2,2'-Methylen-bis-(4,6-di-tert.butylphenol)

2,2'-Ethyliden-bis-(4,6-di-tert.butylphenol)

2,2'-Ethyliden-bis-(6-tert.butyl-4-isobutylphenol)

2,2'-Methylen-bis-[6-(α-methylbenzyl)-4-nonylphenol]

2,2'-Methlyen-bis-[6-(α,α-dimethylbenzyl)-4-nonylphenol]

4,4'-Methylen-bis-(2,6-di-tert.butylphenol)

4,4'-Methylen-bis-(6-tert.butyl-2-methylphenol)

1,1-Bis-(5-tert.butyl-4-hydroxy-2-methylphenyl)-butan

2,6-Di-(3-tert.butyl-5-methyl-2-hydroxybenzyl)-4-methylphenol

1,1,3-Tris-(5-tert.butyl-4-hydroxy-2-methylphenyl)-butan

1,1-Bis-(5-tert.butyl-4-hydroxy-2-methylphenyl)-3-n-dodecylmercapto-butan

Ethylenglycol-bis-[3,3-bis-(3'-tert.butyl-4'-hydroxyphenyl)-butyrat]

Di-(3-tert.butyl-4-hydroxy-5-methylphenyl)-dicyclopentadien

Di-[2-(3'-tert.butyl-2'-hydroxy-5'-methyl-benzyl)-6-tert.butyl-4-methyl-phenyl]-terephthalat.

1.5 Benzylverbindungen

1,3,5-Tri-(3,5-di-tert.butyl-4-hydroxybenzyl)-2,4,6-trimethylbenzol

Di-(3,5-di-tert.butyl-4-hydroxybenzyl)-sulfid

3,5-di-tert.butyl-4-hydroxybenzyl-mercaptoessigsäure-isooctylester

Bis-(4-tert.butyl-3-hydroxy-2,6-dimethylbenzyl)dithiol-terephthalat

1,3,5-Tris-(3,5-di-tert.butyl-4-hydroxybenzyl)-isocyanurat

1,3,5-Tris-(4-tert.butyl-3-hydroxy-2,6-dimethylbenzyl)-isocyanurat

3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der ß-(3,5-Di-tert.butyl-4-hydroxyphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der ß-(5-tert.butyl-4-hydroxy-3-methylphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der ß-(3,5-Di-tert.butyl-4-hydroxyphenyl)-propionsäure, wie z.B.

N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

1.10 Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylestern wie vom Methyl- oder Ethylester, Nickelkomplexe von Ketoximen wie von 2-Hydroxy-4-methyl-phenyl-unde-cylketonoxim, Nickelkomplexe des 1-Phenyl-4-lauroyl-5-hydroxy-pyra-zols, gegebenenfalls mit zusätzlichen Liganden.

Besonders bevorzugte Verbindungen sind:

1,3,5-Tri-(3,5-di-tert.butyl-4-hydroxyphenyl)-2,4,6-trimethylbenzol,
Pentaerithritol-tetrakis-[3-(3,5-di-tert.butyl-4-hydroxyphenyl)-propionat],
β-(3,5-Di-tert.butyl-4-hydroxyphenyl)-propionsäure-n-octadecyl-ester, und
3,5-Di-tert.butyl-4-hydroxybenzylphosphonsäure monoäthylester-Nickelsalz (2:1).

Polyolefine sind die bevorzugten Substrate der vorliegenden Erfindung. Darunter sind folgende Polymerklassen zu verstehen.

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

Es muss allerdings gesagt werden, dass auch andere Substrate sich für den angegebenen Zweck eignen, wie

4. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

5. Polymere, die sich von α,ß-ungesättigten Säuren und deren Derivaten ableiten, wie Polyacrylate und Polymethacrylate, Polyacrylamide und Polyacrylnitrile.

6. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

7. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern wie z.B. mit Polyethylenglykol, Polypropylenglykol oder Polytetramethylenglykol.

8. Polycarbonate und Polyestercarbonate.

Die Menge Additiv bezogen auf das zu schützende Polymer beträgt 0,01-5Gew.%, vorzugsweise 0,05-1 Gew.%. Das Verhältnis Phosphit zu sterisch gehindertem Amin muss der Endverwendung des zu schützenden Artikels angepasst werden und beträgt üblicherweise 3:1 bis 1:3 und bevorzugt ungefähr 1:1.
Das phenolische Antioxidant wird in Konzentrationen von 0,01 bis 1,0 Gew.% eingesetzt.

Die strahlenresistenten Zusammensetzungen können neben den oben erwähnten Costabilisatoren auch weitere Additive enthalten, wie weitere phenolische Antioxidantien, Amine, Phosphorverbindungen. Schwefelverbindungen; Ultraviolett-Absorber, wie Benzophenone, Benztriazole, Salicylate, substituierte Acrylnitrile, Metallsalze oder -chelate, sowie Triazine.

Ausserdem können die Zusammensetzungen, falls nötig, Metallseifen, säurebindende Substanzen, Epoxystabilisatoren, Pigmente, Füllstoffe, Schäumungsmittel, Antistatika, Oberflächenmittel, Gleitmittel, Flammschutzmittel etc. enthalten.

Die Stabilisator-Systeme der vorliegenden Erfindung können zu den stabilisierenden Substanzen auf verschiedene Weise zugegeben werden.

Die Verbindungen können z.B. trocken gemischt und anschliessend in einem Kneter oder Extruder behandelt werden. Alle konventionellen Techniken sind möglich, wie Zugabe vor, während oder nach der Polymerisation.

Die Hochenergie-Strahlen, gegen welche die Additiv-Systeme der vorliegenden Anmeldung eingesetzt werden, sind insbesondere Gamma-Strahlen, Elektronen-Strahlen, Neutronen-Strahlen oder Röntgenstrahlen.

Die so stabilisierten polymeren Zusammensetzungen können für eine Vielzahl industrieller Anwendungen eingesetzt werden, wie als medizinische Artikel, Verpackungsfolien, Lebensmittelbehältnissen, Agrarprodukte, zur Fertigung von Maschinenteilen und Teilen von Kernreaktoren.

Die folgenden Beispiele illustrieren die Erfindung. Die in den Beispielen verwendeten Verbindungen sind wie folgt gekennzeichnet:

A Bis-(2,2,6,6-tetramethylpiperidin-4-yl)-sebacat

B Polykondensationsprodukt aus 1-(2-Hydroxyethyl)-2,2,6,6-tetramethyl-4-hydroxypiperidin und Succinsäure

C Polykondensationsprodukt aus 2,4-Dichlor-6-tert.octylamin-s-triazin und 4,4'-Hexamethylen-bis(amino-2,2,6,6-tetramethylpiperidine

D Bis-(2,4-di-tert.butylphenyl)pentaerithritol-diphosphit.

Beispiel 1: Polypropylenpulver (Profax® 6501 ex Hercules Corp.) wurden mit 0,1 Gew.% Calciumstearat und den in der untenstehenden Tabelle erwähnten Stabilisatoren trocken gemischt. Die Mischung wurde dann extrudiert (Schmelztemperatur 260°C) und dann bei 180°C zu 1,52 mm dicken Prüflingen verpresst. Diese Testplatten wurden mit Gammastrahlen einer Co (60)-Quelle mit einer Dosis von $5 \cdot 10^3$ Gy/h und einer minimalen totalen Dosis von $2,5 \cdot 10^4$ Gy bestrahlt.

An diesen Proben wurde die Verfärbung mit einem Gardner XL-10 Kolorimeter gemäss ASTM D 1925-63T als Yellowness Index bestimmt. Ausserdem wurde die Flexibilität als maximal Bruchwinkel gemäss ASTM D-747 bestimmt. Die Langzeitstabilität wurde in beiden Tests bei Raumtemperatur und bei 130°C in einem Rotationsofen ermittelt.

Tabelle I:

| Stabilisator | Gew. (%) | Vergilbungsfaktor (Y I) | | | | |
|---|---|---|---|---|---|---|
| | | Vor der/ Nach der Bestrahlung | | 4 Monate Raumtemp. | 1 Woche 130°C | 3 Wochen 130°C |
| keiner | - | 1.9 | 2.6 | 1.5 | *F(1) | - |
| A/D | 0.1/0.1 | 2.3 | 3.4 | 3.5 | 15 | 21 |
| A/D | 0.2/0.2 | 2.3 | 4.2 | 5.1 | 16 | 20 |
| A/D | 0.5/0.5 | 1.7 | 4.2 | 5.2 | 5 | 10 |
| B/D | 0.1/0.1 | 1.6 | 3.7 | 3.8 | 8 | 12 |
| C/D | 0.1/0.1 | 2.1 | 3.6 | 2.7 | 9 | 14 |
| C/D | 0.5/0.5 | 5.3 | 8.4 | 8.0 | 8.2 | 8.5 |
| A | 0.1 | 2.5 | 2.7 | 2.4 | 16 | 25 |
| A | 0.2 | 2.1 | 2.6 | 2.4 | 17 | 24 |
| A | 0.5 | 1.2 | 2.6 | 2.4 | 16 | 23 |
| B | 0.1 | 2.2 | 2.6 | 1.7 | 23 | 31 |
| C | 0.1 | 1.9 | 2.5 | 2.1 | 21 | 22 |
| C | 0.5 | 5.6 | 6.7 | 7.0 | 8.0 | 6.5 |
| D | 0.1 | 1.2 | 10.0 | 9.0 | *F(1) | - |

* F (x) : Zerfall nach x Tagen

Tabelle II:

| Stabilisator | Gew. (%) | maximaler Bruch-Winkel (Grad) | | | | |
|---|---|---|---|---|---|---|
| | | Vor der/ Nach der Bestrahlung | | 4 Monate Raumtemp. | 1 Woche 130°C | 3 Wochen 130°C |
| Keiner | - | 90+ | 70 | 20 | *F(1) | - |
| A/D | 0.1/0.1 | 90+ | 90+ | 80 | 30 | 15 |
| A/D | 0.2/0.2 | 90+ | 50+ | 90+ | 90 | 30 |
| A/D | 0.5/0.5 | 90+ | 90+ | 90+ | 90+ | 70 |
| B/D | 0.1/0.1 | 90+ | 90+ | 60 | 50 | 40 |
| C/D | 0.1/0.1 | 90+ | 90+ | 90 | 60 | 40 |
| C/D | 0.5/0.5 | 90+ | 90+ | 90+ | - | - |
| A | 0.1 | 90+ | 90+ | 70 | 3 | 3 |
| A | 0.2 | 90+ | 90+ | 70 | 20 | 15 |
| A | 0.5 | 90+ | 90+ | 90 | 30 | 30 |
| B | 0.1 | 90+ | 70 | 50 | 20 | 20 |
| C | 0.1 | 90+ | 90 | 70 | 40 | 15 |
| C | 0.5 | 90+ | 90+ | 90+ | - | - |
| D | 0.1 | 90+ | 90 | 70 | *F(1) | - |

Patentansprüche:

1. Polymere Zusammensetzungen, die als Stabilisatoren gegen Hochenergie-Strahlen ein Stabilisatorgemisch aus a) einer 2,2,6,6-Tetraalkylpiperidin-Verbindung und b) einem Pentaerithritiol-diphosphit.

2. Zusammensetzung gemäss Anspruch 1, welche als Komponente a) ein Lichtschutzmittel der Formel II

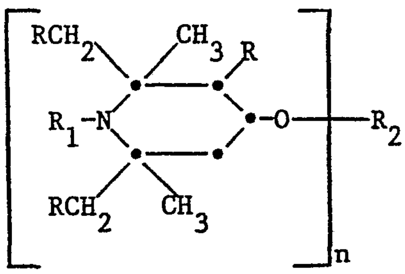

(II)

worin n die Zahlen 1-4, vorzugsweise 1 oder 2 bedeutet, R Wasserstoff oder Methyl ist, $R_1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl, eine Gruppe $-CH_2CH(OH)-Z$, worin Z Wasserstoff, Methyl oder Phenyl ist, wobei $R_1$ vorzugsweise Wasserstoff, $C_1$-$C_{12}$ Alkyl, Allyl, Benzyl, Acetyl oder Acryloyl ist und $R_2$, wenn n = 1, Wasserstoff, gegebenenfalls durch ein oder mehrere Sauerstoffatome unterbrochenes $C_1$-$C_{18}$ Alkyl, Cyanäthyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einen einwertigen Silylrest, vorzugsweise einen Rest einer aliphatischen Carbonsäure mit 2-18 C-Atomen, einer cycloaliphatischen Carbonsäure mit 5-12 C-Atomen oder einer aromatischen Carbonsäure mit 7-15 C-Atomen, und $R_2$, wenn n = 2, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2-36 C-Atomen, einer cycloaliphatischen oder aromatischen Dicarbonsäure mit 8-14 C-Atomen, einer aliphatischen, cycloaliphatischen oder aromatischen Dicarbaminsäure mit 8-14 C-Atomen, und $R_2$, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, und $R_2$, wenn n = 4, einen vierwertigen Rest einer aliphatischen, cycloaliphatischen oder aromatischen Tetracarbonsäure bedeutet, enthält.

3. Zusammensetzung gemäss Anspruch 2, wobei in der Formel II n 1 oder 2 ist, R Wasserstoff oder Methyl bedeutet, $R_1$ Wasserstoff, $C_1$-$C_{12}$ Alkyl, Allyl, Benzyl, Acetyl, Acryloyl ist; und $R_2$, falls n 1 ist ein Rest einer aliphatischen Carbonsäure mit 2-18 C-Atomen, einer cycloaliphatischen Carbonsäure mit 5-12 C-Atomen oder einer aromatischen Carbonsäure mit 7-15 C-Atomen und $R_2$ falls n 2 ist ein Rest einer aliphatischen Dicarbonsäure mit 2-36 C-Atomen, einer cycloaliphatischen oder aromatischen Dicarbonsäure mit 8-14 C-Atomen oder einer aliphatischen, cycloaliphatischen oder aromatischen Dicarbaminsäure mit 8-14 C-Atomen ist.

4. Zusammensetzungen gemäss Anspruch 2, wobei die Komponente a) Bis-(2,2,6,6-Tetramethylpiperidin-4-yl)sebacat ist.

5. Zusammensetzung gemäss Anspruch 1, welche als Komponente b) eine polymere Verbindung ist, deren wiederkehrende Struktureinheit mindestens einen Polyalkylpiperidinrest der Formel I

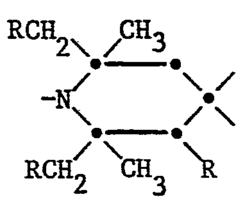

(I)

worin R Wasserstoff oder Methyl ist, enthält.

6. Zusammensetzung gemäss Anspruch 5, wobei die Komponente a) ein Polyester, Polyäther, Polyamid, Polyamin, Polyurethan, Polyharnstoff, Polyaminotriazin, Poly(meth)acrylat, Poly(meth)acrylamid oder deren Copolymere ist.

7. Zusammensetzung gemäss Anspruch 6, wobei die Komponente a) ein Polyaminotriazin ist.

8. Zusammensetzung gemäss Anspruch 1, wobei die Komponente b) ein Phosphit der Formel III

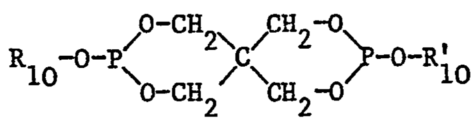

(III)

worin $R_{10}$ und $R'_{10}$ unabhängig voneinander Alkyl, Alkaryl, Aralkyl, Aryl mit je 10-30 C-Atomen oder eine Gruppe der Formel IV bedeuten

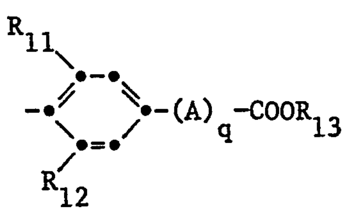

(IV)

wobei $R_{11}$ und $R_{12}$ unabhängig voneinander $C_4$-$C_{12}$ Alkyl sind, und höchstens ein Rest $R_{11}$ oder $R_{12}$ Wasserstoff ist, und A $C_1$-$C_6$ Alkylen ist, und $R_{13}$ $C_1$-$C_{24}$ Alkyl, Phenyl oder Alkylphenyl ist und q 0 oder 1 bedeutet.

9. Zusammensetzung gemäss Anspruch 8, wobei in der Formel III $R_{10}$ eine Gruppe der Formel IV bedeutet, worin $R_{11}$ und $R_{12}$ unabhängig voneinander $C_4$-$C_{12}$ Alkyl sind und A Methylen, Ethylen oder Trimethylen bedeutet und q 1 ist und $R_{13}$ $C_1$-$C_{18}$ Alkyl bedeutet.

10. Zusammensetzung gemäss Anspruch 8, wobei in der Formel III $R_{10}$ 2,4-Dialkylphenyl bedeutet.

11. Verfahren zum Stabilisieren von Polymeren gegen den schädigenden Einfluss von Hochenergie-Strahlen, durch Einarbeitung eines Stabilisatorgemischs gemäss Anspruch 1.

12. Polyolefin gemäss Anspruch 1.

FO 7.3 HPS/rn*